# EUROPÄISCHE PATENTSCHRIFT

(11) **EP 3 717 170 B1**
(45) Veröffentlichungstag und Bekanntmachung des Hinweises auf die Patenterteilung: **10.01.2024**
(21) Anmeldenummer: 17825754.9
(22) Anmeldetag: 29.11.2017
(51) Int. Cl.: B23K 20/10, B06B 1/02, B06B 3/00, B29C 65/08, B23K 31/12, G01H 13/00

(54) **ULTRASCHALLBEARBEITUNGSVORRICHTUNG, VERFAHREN ZUR KONFIGURATION EINER ULTRASCHALLBEARBEITUNGSVORRICHTUNG, SYSTEM MIT SOLCHER ULTRASCHALLBEARBEITUNGSVORRICHTUNG**
ULTRASONIC MACHINING DEVICE, METHOD FOR CONFIGURING AN ULTRASONIC MACHINING DEVICE, AND SYSTEM HAVING AN ULTRASONIC MACHINING DEVICE OF THIS TYPE
DISPOSITIF D'USINAGE PAR ULTRASONS, PROCÉDÉ POUR LA CONFIGURATION D'UN DISPOSITIF D'USINAGE PAR ULTRASONS, SYSTÈME COMPRENANT UN TEL DISPOSITIF D'USINAGE PAR ULTRASONS

(43) Veröffentlichungstag der Anmeldung: 07.10.2020
(73) Patentinhaber: Telsonic Holding AG, 9552 Bronschhofen (CH)
(72) Erfinder: AYABAKAN, Mustafa, 9545 Wängi (CH)
(74) Vertreter: Hepp Wenger Ryffel AG
(86) Internationale Anmeldenummer: PCT/EP2017/080780
(87) Internationale Veröffentlichungsnummer: WO 2019/105539

(56) Entgegenhaltungen:
- EP-A1- 0 786 323
- DE-A1-102012 223 214
- JP-A- 2003 048 134
- US-A1- 2011 056 267
- US-A1- 2016 221 108

## Beschreibung

Die Erfindung betrifft eine Ultraschallbearbeitungsvorrichtung, ein Verfahren zur Konfiguration einer Ultraschallbearbeitungsvorrichtung sowie ein System gemäss dem Oberbegriff der unabhängigen Ansprüche.

Es ist bei Ultraschallbearbeitungsvorrichtungen bekannt, dass individuelle Parameter der Komponenten, beispielsweise des Generators, Konverters, Boosters, der Sonotrode, des HV-Kabels, des Maschinengestells oder der Aufnahmevorrichtung für das Werkstück die Prozessparameter, insbesondere die Resonanzfrequenz und die im Betrieb verwendbare Frequenzbandbreite und/oder die Amplitude der Vorrichtung beeinflussen. In der Fertigung von all diesen Komponenten entstehen aufgrund von Fertigungstoleranzen unabdingbar Abweichungen. Diese Abweichungen beeinflussen die Prozessparameter, insbesondere die Resonanzfrequenz und die im Betrieb verwendbare Frequenzbandbreite und/oder die Amplitude der Ultraschallbearbeitungsvorrichtung. So muss beim Austausch einer jeder dieser Komponenten die Ultraschallbearbeitungsvorrichtung neu kalibriert werden. Durch die Justierung oder Kalibrierung werden die tatsächlichen Masse der Komponenten berücksichtigt.

Aus der DE 10 2015 221 615 A1 ist beispielsweise ein System zur automatischen Kalibrierung einer Ultraschallschweissvorrichtung bekannt. Das System enthält eine Messeinheit zum Messen eines Ist-Betriebsparameters sowie einen Computer. Zur Kalibrierung wird die Ultraschallschweissvorrichtung mit mindestens einem Soll-Betriebsparameter auf der Basis von einem Kalibrationsdatenspeicher betrieben. Dabei misst die Messeinheit den Ist-Betriebsparameter. Anschliessend wird der Ist-Betriebsparameter mit dem Soll-Betriebsparameter verglichen und gegebenenfalls eine Kalibrierung der Ultraschallschweissvorrichtung durch Anpassung der Solldaten vorgenommen.

Nachteilig bei der bekannten Ultraschallschweissvorrichtung ist, dass die Kalibrierung auf aufwändige Messungen während des Kalibrationsvorgangs zurückgreifen muss und der Vorgang so verlangsamt wird.

Aus der EP 0 786 323 A1 (Anfangspunkt dieser Erfindung) ist ein Verfahren zur interaktiven Einstellung von Schweissparametern an Ultraschallschweissvorrichtungen in Abhängigkeit der zu erledigenden Schweissarbeiten bekannt. Das Verfahren verwendet zur Einstellung der Parameter eine Angabe zur Schweissqualität einer mit einem initialen Parameter geschweissten Schweissnaht. Es soll ein automatisches Einstellen der Schweissvorrichtung aufgrund der Anwendung ermöglicht werden.

Nachteilig bei dem bekannten Verfahren ist, dass eine initiale Schweissnaht geschweisst werden muss und deren Qualität von einer Person beurteilt werden muss.

Aus der US 2003/0198667 A1 sind ein Schweissgerät und ein Verfahren zur Diagnose von diesem bekannt. Das Gerät umfasst einen Sensor sowie einen Datenspeicher. Der Datenspeicher kann Informationen bezüglich des Schweissgeräts enthalten, wie beispielsweise eine Seriennummer, eine Modellnummer, das Produktionsdatum des Schweissgeräts, sowie Informationen bezüglich in dem Schweissgerät verwendete Komponenten, wie beispielsweise einen Komponenten-Teil-Identifikator oder einen Komponenten-Version-Identifikator. Basierend auf diesen Daten und Daten des Sensors (beispielsweise eines Strom- und Spannungssensors) evaluiert eine Diagnoseeinheit den Zustand des Schweissgeräts. Die Diagnoseeinheit kann anschliessend korrektive Massnahmen einleiten. Nachteilig bei dem bekannten Gerät ist, dass Fertigungstoleranzen der Komponenten nur indirekt durch eine Messung der Systemkonfiguration berücksichtigt werden können. Durch die Messung wird die Systemkonfiguration verlangsamt.

Es ist die Aufgabe der vorliegenden Erfindung, eine Ultraschallbearbeitungsvorrichtung zu schaffen, welche die Nachteile des Standes der Technik vermeidet und insbesondere ein Verfahren zur Konfiguration sowie ein System zu schaffen, bei welchem sichergestellt wird, dass das System in einem Sollzustand betrieben wird.

Die Aufgabe wird durch eine Ultraschallbearbeitungsvorrichtung sowie durch Verfahren zur Konfiguration der Ultraschallbearbeitungsvorrichtung und zum Herstellen einer Komponente für eine Ultraschallbearbeitungsvorrichtung, und ein System gemäss den unabhängigen Ansprüchen 1, 11, 13 und 14 gelöst. Weiteren Ausführungsbeispiele der Erfindung sind in den abhängigen Ansprüche definiert.

Erfindungsgemäss ist bei einer Ultraschallbearbeitungsvorrichtung zum Bearbeiten eines Werkstückes wenigstens einer, insbesondere allen Komponenten ausgewählt aus der Liste Generator, Konverter, Booster, Sonotrode, HV-Kabel, Maschinengestell und Aufnahmevorrichtung für das Werkstück ein Identifikator zugeordnet. Der Identifikator charakterisiert wenigstens einen individuellen Parameter der entsprechenden Komponente. Bevorzugt charakterisiert der Identifikator einen Parameter, welcher die Prozessparameter, insbesondere die Resonanzfrequenz und die im Betrieb verwendbare Frequenzbandbreite und/oder die Amplitude beeinflusst, insbesondere einen elektrischen, akustischen oder dimensionalen Parameter. Der Vorrichtung ist eine Eingabeschnittstelle zugeordnet. Mittels dieser Eingabeschnittstelle sind der Identifikator oder aufgrund des Identifikators erzeugte Daten einlesbar. Der Vorrichtung ist eine Rechenanordnung zugeordnet. Mittels der Rechenanordnung ist aufgrund des eingelesenen Identifikators oder aufgrund von aus dem Identifikator erzeugten Daten mindestens ein Parameter der Vorrichtung derart bestimmbar oder einstellbar, dass die Vorrichtung in einem Soll-Betriebszustand betrieben wird. Dieser Soll-Betriebszustand ist insbesondere ein Resonanzschwingungszustand.

Vorteilhaft erweist sich, dass so die Vorrichtung durch das Lesen des Identifikators in einen Soll-Betriebszustand eingestellt werden kann, ohne dass dazu Messungen während der Einstellung notwendig sind. Das Messen von individuellen Parametern der Komponenten während der Justierung oder Kalibrierung entfällt. Dies ermöglicht insbesondere ein schnelles Einstellen des Soll-Betriebszustandes. Eine Messvorrichtung zur Ausmessung der Komponenten vor Ort ist nicht mehr notwendig. Individuelle Parameter der Komponenten können einfach durch das Einlesen des entsprechenden Identifikators in der Justierung oder Kalibrierung berücksichtigt werden.

Die Frequenzbandbreite wird durch eine untere und eine obere Grenzfrequenz charakterisiert. Die Grenzfrequenzen werden aufgrund von dimensionalen, akustischen und elektrischen Parameter der Ultraschallbearbeitungsvorrichtung gewählt. Die Frequenzbandbreite entspricht also einem Frequenzspektrum.

Die Amplitude ist die Amplitude der mechanischen Schwingung der Ultraschallbearbeitungsvorrichtung.

Der Identifikator ist in einer Ausführungsform als RFID-Chip, Smartcode, Barcode oder USB-Stick ausgeführt.

RFID-Chips erlauben das Speichern von im Vergleich zu Barcodes verhältnismässig grossen Datenmengen und erlauben die Verwendung von ausführlichen Identifikatoren und somit die Codierung von grossen Datenmengen in den Identifikator. RFID-Chips bieten neben der grossen Datendichte weiter den Vorteil, dass sie einfach maschinell gelesen werden können. Durch die Verwendung von RFID-Chips wird so die direkte digitale Verarbeitung des Identifikators ermöglicht. Der RFID-Chip kann über einen entsprechenden RFID-Leser auch aus einer Distanz und ohne optisch sichtbar sein zu müssen, gelesen werden. So kann beispielsweise ein zentraler RFID-Leser im Generator der Ultraschallbearbeitungsvorrichtung angebracht werden, wobei mit diesem Leser die Chips aller Komponenten der Ultraschallbearbeitungsvorrichtung selbst nach der Montage der entsprechenden Komponenten gelesen werden können.

Ein Smartcode ist eine zweidimensionale Anordnung von weissen bzw. schwarzen Elementen. Der Smartcode erlaubt durch die zweidimensionale Anordnung dieser Elemente eine grössere Datendichte als dies beispielsweise Barcodes erlauben. Durch die grössere Datendichte lassen sich unter anderem fehlererkennende Elemente in den Code integrieren, sodass dieser zuverlässiger gelesen werden kann. Der Smartcode zeichnet sich daher gegenüber dem Barcode auch durch eine zuverlässigere Maschinenlesbarkeit aus und eignet sich so besonders gut zur Verwendung mit der Ultraschallbearbeitungsvorrichtung.

Vorteilhaft bei einem Barcode erweist sich, dass dieser einfach maschinell lesbar ist. Der Barcode eignet sich somit zur maschinellen Verarbeitung des Identifikators.

Der Identifikator in Form eines USB-Stick bietet den Vorteil, dass der Identifikator auf dem USB-Stick digital abgespeichert ist und so einfach maschinell weiter verarbeitet werden kann. Hinzu kommt, dass die Eingabeschnittstelle der Vorrichtung im Fall eines USB-Identifikators ganz einfach in Form einer USB-Schnittstelle ausgebildet werden kann. Vorteilhaft erweist sich weiter, dass der USB-Sticks nicht auf der Komponente selbst angeordnet wir und so dort keinen Platz beansprucht. Weiter wird die Masse der Komponente nicht durch den Identifikator beeinflusst und so einen Einfluss des Identifikators auf die Prozessparameter, insbesondere die Resonanzfrequenz und die im Betrieb verwendbare Frequenzbandbreite und/oder die Amplitude der Vorrichtung vermieden.

Ein Parameter kann im Sinne dieser Anmeldung auch ein Parametersatz sein.

Die Eingabeschnittstelle ist in einer Ausführungsform als USB-Schnittstelle, Tastatur, Touch-Screen oder als RFID-Leser ausgeführt.

Die Rechenanordnung kann in der Ultraschallbearbeitungsvorrichtung angeordnet sein oder räumlich getrennt von dieser angeordnet sein. So kann die Rechenanordnung beispielsweise ein Smartphone, ein Computer, ein Server sein, welche im Betrieb durch eine entsprechende Applikation der Ultraschallbearbeitungsvorrichtung zugeordnet ist.

In einer bevorzugten Ausführungsform ist der individuelle Parameter der Komponente ein nach der Herstellung durch den Hersteller gemessener Parameter.

Vorteilhaft erweist sich, dass so auch Fertigungstoleranzen der individuellen Komponenten in der Systemjustierung oder Systemkalibrierung ohne Notwendigkeit einer späteren Messung berücksichtigt werden können. Das ist bei Ultraschallbearbeitungsvorrichtung von grosser Bedeutung, da schon die kleinsten Fertigungstoleranzen der Komponenten den Soll-Betriebszustand der Ultraschallbearbeitungsvorrichtung beeinflussen.

Die Messung der Komponente kann so direkt nach der Herstellung durchgeführt werden. Das Durchführen der Messung direkt nach der Herstellung erlaubt es, diese Messung auch für die Qualitätssicherung des Herstellungsverfahrens heranzuziehen.

Der individuelle Parameter ist in einer Ausführungsform ein exaktes gemessenes Ist-Mass, Ist-Gewicht, Ist-Impedanz, Ist-Frequenz, Amplitudenübersetzung oder ein Materialtyp oder ein Herstellungsdatum (Alter) der Komponente.

In einer bevorzugten Ausführungsform charakterisiert der individuelle Parameter eine Abweichung der Komponente gegenüber einem Soll-Zustand dieser Komponente.

Dies ermöglicht eine besonders einfache Handhabung der individuellen Parameter, da der Parameter so direkt die zu korrigierende Abweichung darstellt. So kann die Rechenanordnung den individuellen Parameter besonders einfach verarbeiten.

In einer bevorzugten Ausführungsform bestimmt der Identifikator die Komponenten eineindeutig.

Dies erlaubt vom Identifikator auf die exakte Komponente zurückzuschliessen. So kann nicht nur die Schweissvorrichtung aufgrund des individuellen Parameters kalibriert werden, sondern auch nach der Inbetriebnahme des Systems Auswertungen über den Betrieb gesammelt werden, wobei diese Daten einer spezifischen Komponente zugeordnet werden können.

In einer bevorzugten Ausführungsform ist die Eingabeschnittstelle als eine Einlesevorrichtung ausgeführt. Die Einlesevorrichtung ist mit der Rechenanordnung verbindbar oder verbunden.

Dies ermöglicht ein direktes Einlesen des Identifikators durch die Einlesevorrichtung und spart somit dem Benutzer der Vorrichtung die Eingabe des Identifikators. Der eingelesene Identifikator kann über die Verbindung zur Rechenanordnung direkt an diese übermittelt werden.

Die Einlesevorrichtung ist beispielsweise als Infrarotscanner, als Kamera, Farbsensor oder als RFID-Leser ausgeführt.

In einer bevorzugten Ausführungsform ist die Einlesevorrichtung als Teil einer Ultraschallbearbeitungsvorrichtung ausgeführt. Vorteilhaft erweist sich, dass die Ultraschallbearbeitungsvorrichtung eine Einlesevorrichtung beinhaltet und der Identifikator so mühelos durch die Vorrichtung selbst eingelesen werden kann.

In einer bevorzugten Ausführungsform sind die Rechenanordnung und die Einlesevorrichtung in einer gemeinsamen Baueinheit ausgeführt.

Bevorzugt ist die Rechenanordnung und/oder die Lesevorrichtung im Generator ausgeführt.

Dadurch ist die Rechenanordnung und/oder die Einlesevorrichtung in unmittelbarer Nähe der zu kalibrierenden Komponenten angeordnet. Das ermöglicht kurze Verbindungswege zwischen der Rechenanordnung und der Einlesevorrichtung sowie zwischen den zu kalibrieren dann Komponenten. Dadurch wird ein ökonomischer Aufbau der Vorrichtung ermöglicht und die Störanfälligkeit der Übertragung der Identifikatoren in der Vorrichtung (beispielsweise durch die RFID-Technologie) verringert.

In einer bevorzugten Ausführungsform weist die Rechenanordnung eine Datenschnittstelle auf. Die Datenschnittstelle ist so ausgestaltet, dass sie eine Fernwartung ermöglicht. Insbesondere soll die Datenschnittstelle eine Fernjustierung oder Fernkalibrierung der Ultraschallbearbeitungsvorrichtung ermöglichen. Insbesondere soll damit eine Fernjustierung oder Fernkalibrierung des Generators ermöglicht werden.

Dies ermöglicht ein Durchführen von rechenintensiven Vorgängen auf einer abgesetzten Rechenanordnung. Eine abgesetzte Rechenanordnung ist eine räumlich von der Ultraschallbearbeitungsvorrichtung getrennte Rechenanordnung, beispielsweise eine Rechenanordnung in einem anderen Raum eines Gebäudes oder in einem anderen Gebäude. Somit kann die Rechenanordnung in der Ultraschallbearbeitungsvorrichtung kleiner und somit insbesondere ökonomischer ausgeführt werden. Weiter ermöglicht die Datenschnittstelle die ständige Überwachung der Ultraschallbearbeitungsvorrichtung aus der Ferne und ebenfalls ein korrektives Eingreifen.

Die Datenschnittstelle ist in einer Ausführungsform als USB-Schnittstelle, Ethernet-Schnittstelle, WLAN-Schnittstelle Bluetooth-Schnittstelle oder NFC(Near Field Communication)-Schnittstelle ausgeführt.

In einer bevorzugten Ausführungsform ist der Identifikator an der Komponente angebracht.

Dies ermöglicht das Lesen des Identifikators kurz vor der Verwendung der Komponenten in der Ultraschallbearbeitungsvorrichtung. So kann beispielsweise beim Austausch einer Komponente die neue Komponente bereits ausgepackt und bereitgestellt werden und der Identifikator kurz vor dem Einbau der neuen Komponente gelesen werden. Dies ermöglicht die Ultraschallschweissvorrichtung mit einer geringeren tiefen Stillstandszeit zu betreiben.

In einer bevorzugten Ausführungsform ist der Identifikator einer Verpackungskomponente zugeordnet.

Dies ermöglicht insbesondere bei kleinen Komponenten das Zuordnen des Identifikators zur Komponente ohne das dazu die Komponente selbst durch den Identifikator in einer Art und Weise beeinträchtigt wird. Weiter ermöglicht diese Zuordnung des Identifikators einen Aufbau/Umbau der Ultraschallbearbeitungsvorrichtung und ein erst anschliessendes Einlesen aller Identifikatoren. So kann die Phase des Austauschs der Komponenten und die Phase der Konfiguration/Justierung/Kalibrierung des Systems zeitlich getrennt werden. So wird der Resonanzzustand der Ultraschallbearbeitungsvorrichtung nicht durch den Identifikator/die Identifikatoren beeinflusst.

Zur Lösung der Aufgabe führt ebenfalls ein Verfahren zur Konfiguration einer Ultraschallbearbeitungsvorrichtung. Die Konfiguration wird insbesondere nach einem Austausch wenigstens einer der Komponenten ausgewählt aus der Gruppe Generator, Konverter, Booster, Sonotrode, HV-Kabel, Maschinengestell und Aufnahmevorrichtung für das Werkstück durchgeführt. Das Verfahren umfasst die folgende Schritte: Einlesen eines Identifikators. Der Identifikator charakterisiert einen individuellen Parameter der Komponente. Der Identifikator charakterisiert insbesondere einen die Prozessparameter, insbesondere die Resonanzfrequenz und die im Betrieb verwendbare Frequenzbandbreite und/oder die Amplitude der Vorrichtung beeinflussenden Parameter. Insbesondere wird ein elektrischer, akustischer oder dimensionaler Parameter mittels des Identifikators charakterisiert. Der Identifikator wird mittels einer Einlesevorrichtung eingelesen. In einem weiteren Schritt wird aufgrund des eingelesen Identifikators oder aufgrund von aus dem Identifikator erzeugten Daten ein Parameter der Vorrichtung bestimmt. Der Parameter ermöglicht das Betreiben der Vorrichtung in einem Soll-Betriebszustand. Der Soll-Betriebszustand ist insbesondere ein resonanter Schwingungszustand. In einem nächsten Schritt wird die Vorrichtung entsprechend des wenigstens einen Parameters eingestellt. Insbesondere wird die Frequenzbandbreite und/oder die Amplitude des Generators angepasst.

Dies ermöglicht die Konfiguration der Ultraschallbearbeitungsvorrichtung ausschliesslich aufgrund eines eingelesenen Identifikators oder mehreren eingelesenen Identifikatoren, ohne dass dazu Messungen vor Ort notwendig sind. Somit wird eine effiziente Konfiguration der Ultraschallbearbeitungsvorrichtung ermöglicht. Der sonst notwendige Schritt des Messens eines Betriebszustandes der Ultraschallbearbeitungsvorrichtung und ein anschliessendes Vergleichen des gemessenen Betriebszustands mit dem Soll-Betriebszustand entfallen. Es ist ausschliesslich das Einlesen des Identifikators notwendig, wobei aufgrund von diesen die Justierung oder Kalibrierung ausgeführt wird.

In einer bevorzugten Ausführungsform umfasst das Verfahren zur Konfiguration weiter die Schritte: Übermittlung des Identifikators oder aufgrund des Identifikators erzeugten Daten zu einer räumlich getrennten Rechenanordnung. Anschliessend wird der dem Identifikator zugeordnete Parameter von der Rechenanordnung zur Vorrichtung übermittelt.

Dies erlaubt die räumlich getrennte Anordnung der Rechenanordnung von der Ultraschallbearbeitungsvorrichtung. Es kann so eine zentrale Rechenanordnung zur Verfügung gestellt werden, welche die Parameter speichert und/oder berechnet und diese nach Erhalt des entsprechenden Identifikators an die Ultraschallbearbeitungsvorrichtung übermittelt. Die Ultraschallbearbeitungsvorrichtung kann so ohne leistungsstarke Rechenanordnung ausgeführt werden.

Die Zentralverwaltung der Parameter erlaubt weiter die Auswertung der verschiedenen Parameter und somit unter anderem Rückschlüsse auf die Produktionsqualität. Weiter kann der Zeitpunkt des Abrufs des Parameters zentral festgehalten werden und ebenfalls analysiert werden. Dies erlaubt Aussagen zur Performance der Vorrichtung somit einen Rückschluss auf mögliche Optimierungen der Vorrichtung.

Zur Lösung der Aufgabe führt ebenfalls ein Verfahren zum Herstellen einer Komponente für eine Ultraschallbearbeitungsvorrichtung. Das Verfahren umfasst das Erzeugen einer Komponente. In einem nächsten Schritt wird die erzeugte Komponente ausgemessen und aufgrund der Messung ein die Komponente charakterisierender Parameter, insbesondere ein Parametersatz, erzeugt. In einem nächsten Schritt wird ein eineindeutiger Identifikator erzeugt, welcher dem Parameter, insbesondere dem Parametersatz, zugeordnet wird. In einem weiteren Schritt wird der Identifikator der Komponente zugeordnet.

Vorteilhaft erweist sich, dass so die Komponente direkt nach der Herstellung ausgemessen wird. Ein Ausmessen der Komponente bei der Justierung oder Kalibrierung, das heisst am Ort der Verwendung der Ultraschallbearbeitungsvorrichtung entfällt. Das Ausmessen kann so unter idealen Bedingungen an einem speziell dafür ausgerüsteten Ort von einem Profi unter zu Hilfenahme von speziell dafür konzeptionierten (komplexen) Messvorrichtungen durchgeführt werden. Im Vergleich zu einer Messung, welche am Anwendungsort der Ultraschallbearbeitungsvorrichtung durch einen Anwender durchgeführt wird, ist eine solche Messung genauer und erlaubt somit das genauere Einstellen der Ultraschallbearbeitungsvorrichtung. Dies ermöglicht das Betreiben der Vorrichtung mit den gleichen Ergebnissen. Die Messresultate können durch die Verarbeitung in einen Parameter, insbesondere einen Parametersatz, und durch die Zuordnung dieses Parameters, insbesondere dieses Parametersatzes, zu einem Identifikator, welcher wiederum der Komponente zugeordnet ist, auf eine einfache Art und Weise gehandhabt werden. Es entfällt so das Mitliefern eines ausführlichen Messberichts der Komponente bei derer Auslieferung. Es entfällt ebenfalls ein aufwendiges Berücksichtigen des Messberichts beim Austausch der Komponente. Eine nach diesem Verfahren hergestellte Komponente ermöglicht somit eine einfachere Verwendung der Komponente in einer Ultraschallbearbeitungsvorrichtung. Das Verfahren kann bei der Herstellung des Generators, Konverters, Boosters, der Sonotrode, des HV-Kabels, Maschinengestells und der Aufnahmevorrichtung für das Werkstück angewendet werden.

Zur Lösung der Aufgabe führt ebenfalls ein System. Das System umfasst wenigstens eine Ultraschallbearbeitungsvorrichtung wie vorangehend und im Folgenden beschrieben. Das System umfasst ebenfalls eine Datenbank. Das System umfasst weiter eine Kommunikationsschnittstelle zwischen der Ultraschallbearbeitungsvorrichtung und der Datenbank. Diese Kommunikationsschnittstelle dient der Übermittlung von Informationen zwischen der Ultraschallbearbeitungsvorrichtung und der Datenbank.

Vorteilhaft erweist sich, dass die Datenbank eine zentrale Speicherung, Verwaltung, Auswertung und Kontrolle von Daten bezüglich der Ultraschallbearbeitungsvorrichtung ermöglicht. Insbesondere kann dadurch die Ultraschallbearbeitungsvorrichtung selbst einfacher, das heisst ohne Datenspeicher ausgestaltet werden.

In einer bevorzugten Ausführungsform ermöglicht die Datenbank die Verknüpfung eines Identifikators, welcher wenigstens einer Komponente der Ultraschallbearbeitungsvorrichtung zugeordnet ist, mit einem Parameter, insbesondere einem Parametersatz, welcher die Komponente charakterisiert.

Dies ermöglicht die Zuordnung eines komplexen Parameters, insbesondere Parametersatzes, zu einer Komponente anhand eines einfachen Identifikators, welcher der Komponente zugeordnet werden kann.

In einer weiteren Ausführungsform umfasst das System neben der abgesetzten Datenbank auch eine abgesetzte Rechenanordnung.

Dies erlaubt es die Ultraschallschweissvorrichtung weiter zu vereinfachen und trotzdem die oben im Folgenden beschriebene Justierung oder Kalibrierung aufgrund des Einlesens von Identifikatoren zu ermöglichen.

Die Erfindung wird im Folgenden anhand von Ausführungsbeispiel in Figuren weiter erläutert. Hierbei zeigen:
- Figur 1:: Darstellung eines ersten Ausführungsbeispiels der Ultraschallbearbeitungsvorrichtung.
- Figur 2:: Darstellungen eines ersten Ausführungsbeispiels des Identifikators.
- Figur 3:: Darstellung eines zweiten Ausführungsbeispiels des Identifikators.
- Figur 4:: Darstellung eines dritten Ausführungsbeispiels des Identifikator.
- Figur 5:: Schematische Darstellung des Ausführungsbeispiels der Ultraschallbearbeitungsvorrichtung gemäss Figur 1.
- Figur 6:: Schematische Darstellung eines zweiten Ausführungsbeispiels einer erfindungsgemässen Ultraschallbearbeitungsvorrichtung.
- Figur 7:: Schematische Darstellung eines dritten Ausführungsbeispiels einer erfindungsgemässen Ultraschallbearbeitungsvorrichtung.
- Figur 8:: Schematische Darstellung eines vierten Ausführungsbeispiels einer erfindungsgemässen Ultraschallbearbeitungsvorrichtung.
- Figur 9:: Schematische Darstellung eines fünften Ausführungsbeispiels einer erfindungsgemässen Ultraschallbearbeitungsvorrichtung.
- Figur 10:: Schematische Darstellung eines sechsten Ausführungsbeispiels einer erfindungsgemässen Ultraschallbearbeitungsvorrichtung.
- Figur 11:: Schematische Darstellung eines siebten Ausführungsbeispiels einer erfindungsgemässen Ultraschallbearbeitungsvorrichtung.

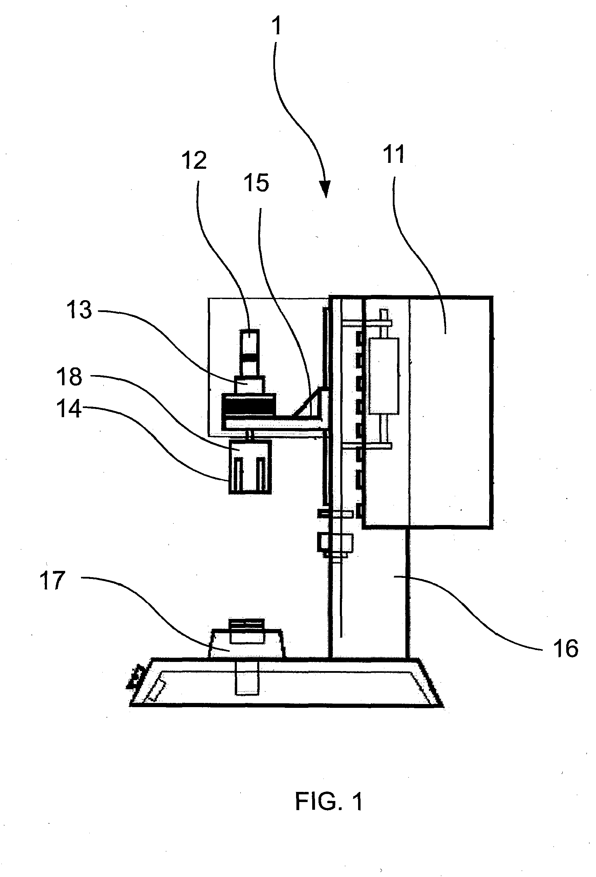

Figur 1 zeigt vereinfacht ein erstes Ausführungsbeispiel einer Ultraschallbearbeitungsvorrichtung 1 in Form einer Ultraschallschweissvorrichtung. Die Ultraschallschweissvorrichtung 1 besteht aus mehreren Komponenten. Sie umfasst einen Generator 11, einen Konverter 12, ein HV-Kabel 15, einen Booster 13, eine Sonotrode 14, ein Maschinengestell 16 und eine Aufnahmevorrichtung 17 für das Werkstück. Der Generator 11 ist über das HV-Kabel 15 mit dem Konverter 12 verbunden. Der Generator 11 generiert ein elektrisches Wechselstromsignal, welches über das HV-Kabel 15 auf den Konverter 12 übertragen wird und so den Konverter 12 speist. Der Konverter 12 setzt das elektrische Wechselstromsignal in eine mechanische Schwingung um. Diese mechanische Schwingung wird vom Konverter 12 auf den Booster 13 übertragen. Der Booster 13 ist so ausgestaltet, dass er die Amplitude der Schwingung verändert. Vom Booster 13 wird die mechanische Schwingung auf die Sonotrode 14 übertragen, wobei die Sonotrode 14 danach diese Schwingung auf das Werkstück überträgt. So wird das Werkstück ultraschallgeschweisst. Der Konverter 12, Booster 13 und die Sonotrode 14 werden durch das Maschinengestell 16 an der Vorrichtung 1 gehalten.

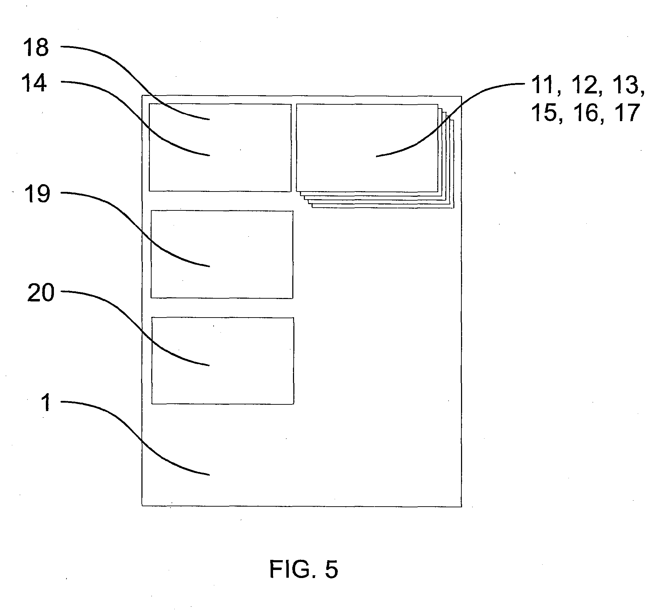

Um die Ultraschallschweissvorrichtung 1 im Soll-Betriebszustand, das heisst bei Resonanzfrequenz zu betreiben, müssen die Komponenten präzise aufeinander abgestimmt sein. Da die Komponenten beispielsweise wegen Fertigungstoleranzen von den Soll-Massen abweichen, ist nach einem Auswechseln einer Komponente eine Justierung der Ultraschallschweissvorrichtung 1 notwendig. Durch die Justierung werden die individuellen Parameter (Ist-Parameter) der Komponenten berücksichtigt und die Ultraschallschweissvorrichtung 1 auf diese individuellen Parameter eingestellt. So kann beispielsweise die Frequenzbandbreite und/oder die Amplitude des elektrischen Wechselstromsignals des Generators 11 angepasst werden. Die Frequenz des Wechselstromsignales wird durch die Justierung des Generators so angepasst, dass die Ultraschallschweissvorrichtung 1 mit einer bestimmten Amplitude in Resonanz betrieben wird. In dem erfindungsgemässen Ausführungsbeispiel weist die Sonotrode 14 einen Identifikator 18 auf. Der Identifikator 18 ist einem individuellen Parameter der Sonotrode 14 verknüpft. Die Justierung der Ultraschallschweissvorrichtung 1 kann so über das Einlesen des Identifikators 18 vereinfacht werden. Zur Justierung wird der Identifikator 18 durch eine Eingabeschnittstelle (siehe Figur 5) eingegeben, wodurch anhand des Identifikators 18 eine Aussage über die individuelle Ausgestaltung der Sonotrode 14 gemacht werden kann. Diese Information wird verwendet um die Justierung vorzunehmen. So können beispielsweise aufgrund des Identifikators 18, welcher der Sonotrode 14 zugeordnet ist, die tatsächlichen Masse der Sonotrode 14 bestimmt werden. Diese Masse sind nach der Herstellung der Sonotrode 14 gemessen und mit dem Identifikator 18 verknüpft worden. So können die Masse anhand des Identifikators 18 ermittelt werden und für die Berechnung der Frequenzbandbreite und/oder Amplitude verwendet werden. Bei der Justierung wird anschliessend die Generatorfrequenz auf diese berechnete Frequenzbandbreite und/oder Amplitude angepasst.

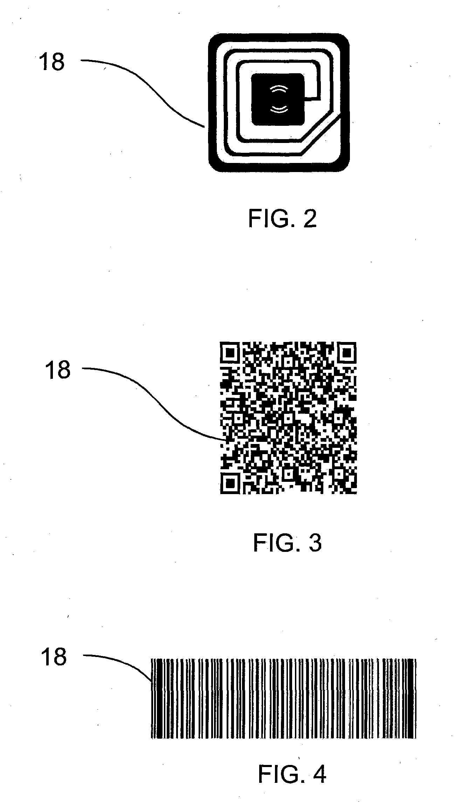

Figur 2 zeigt schematisch ein erstes Ausführungsbeispiel eines erfindungsgemässen Identifikators 18. Es handelt sich dabei um einen RFID-Chip. RFID-Chips sind aus dem Stand der Technik bestens bekannt.

Figur 3 zeigt schematisch ein zweites Ausführungsbeispiel eines erfindungsgemässen Identifikators. Es handelt sich dabei um einen Smart-Code.

Figur 4 zeigt schematisch ein drittes Ausführungsbeispiel eines erfindungsgemässen Identifikators 18. Es handelt sich um einen Barcode.

In einem weiteren Ausführungsbeispiel (nicht gezeigt) ist der Identifikator 18 als USB-Stick ausgeführt, welcher beispielsweise der Verpackung beiliegt.

Figur 5 zeigt eine schematische Darstellung des Ausführungsbeispiels der Ultraschallschweissvorrichtung 1 aus Figur 1. Die Vorrichtung 1 umfasst die Komponenten Generator 11, Konverter 12, Booster 13, Sonotrode 14, HV-Kabel 15, Maschinengestell 16 und Aufnahmevorrichtung 17 für das Werkstück. In diesem Ausführungsbeispiel ist der Sonotrode 14 als einzige Komponente ein Identifikator 18 zugeordnet. Die Vorrichtung 1 umfasst weiter eine Eingabeschnittstelle 19 und eine Rechenanordnung 20. Die Eingabeschnittstelle 19 ermöglicht die Eingabe des Identifikators 18, wobei die Rechenanordnung 20 der Verarbeitung des Identifikators 18 und der Justierung der Vorrichtung 1 dient. Die Eingabeschnittstelle 19 ist in diesem Ausführungsbeispiel als USB-Schnittstelle ausgeführt. Der Identifikator 18, welche in diesem Ausführungsbeispiel als USB-Stick ausgeführt ist, kann so von einer die Vorrichtung 1 bedienenden Person in die Eingabeschnittstelle 19 eingeführt werden. Der eingelesene Identifikator 18 wird anschliessend durch die Rechenanordnung 20 verarbeitet. Die Rechenanordnung 20 ermittelt aufgrund des Identifikators 18 einen individuellen Parameter der Sonotrode 14. Dieser Parameter entspricht in diesem Ausführungsbeispiel den exakten Ist-Massen der Sonotrode 14. Die Rechenanordnung 20 verwendet diese Ist-Masse zur Berechnung einer Frequenzbandbreite und/oder Amplitude für die Ultraschallschweissvorrichtung 1 und passt die Frequenzbandbreite und/oder Amplitude des Generators 11 entsprechend an.

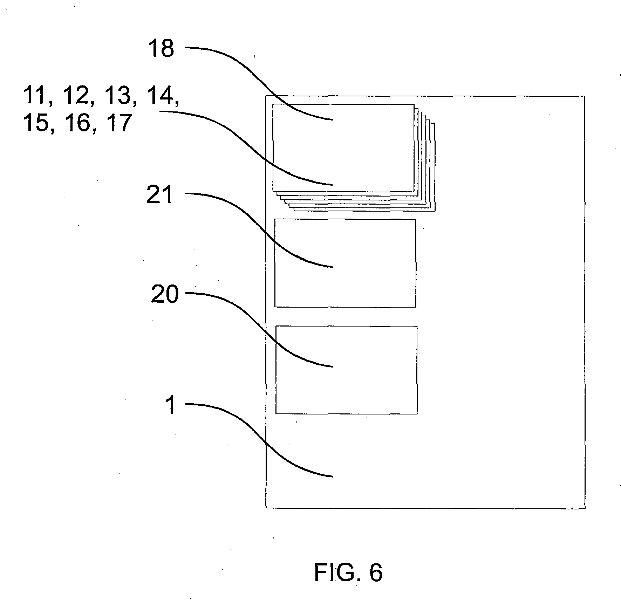

Figur 6 zeigt ein weiteres Ausführungsbeispiel der Ultraschallschweissvorrichtung 1. In diesem Ausführungsbeispiel weisen alle Komponenten, das heisst der Generator 11, der Konverter 12, der Booster 13, die Sonotrode 14, das HV-Kabel 15, das Maschinengestell 16 und die Aufnahmevorrichtung 17 für das Werkstück je einen Identifikator 18 mit unterschiedlichen Informationen auf. Die Eingabeschnittstelle ist in diesem Ausführungsbeispiel als ein Einlesevorrichtung 21 ausgeführt. Die Einlesevorrichtung 21 ist ein RFID-Leser. Die Identifikatoren 18 sind als RFID-Chips direkt auf den Komponenten angebracht. Der Identifikatoren 18 der Komponenten kann so durch die Einlesevorrichtung 21 eingelesen werden. Die Einlesevorrichtung 21 leitet die Identifikatoren 18 der Rechenanordnung 20 weiter. Die Rechenanordnung 20 bestimmt aufgrund der Identifikatoren 18 die individuellen Parameter der Komponenten 11, 12, 13, 14, 15, 16, 17, sodass die Rechenanordnung 20 anschliessend eine auf die individuelle Komponenten angepasste Frequenzbandbreite und/oder Amplitude berechnen kann. Die Rechenanordnung 20 übermittelt die berechnete Frequenzbandbreite und/oder Amplitude dem Generator 11, welcher seine Ausgangssignal entsprechend anpasst.

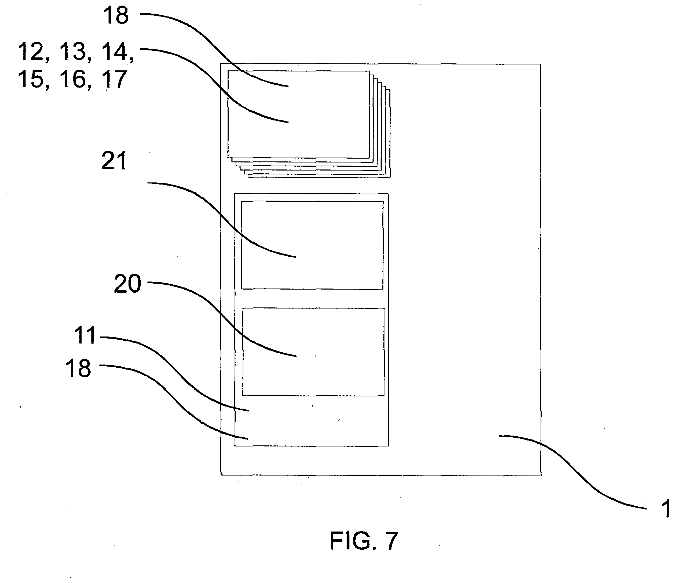

Figur 7 zeigt ein weiteres Ausführungsbeispiel der erfindungsgemässen Ultraschallschweissvorrichtung 1. In diesem Ausführungsbeispiel sind die Rechenanordnung 20 und die Lesevorrichtung 21 im Generator 11 der Vorrichtung 1 integriert. Jeder Komponente 11, 12, 13, 14, 15, 16, 17 ist ein eineindeutiger Identifikator 18 zugeordnet.

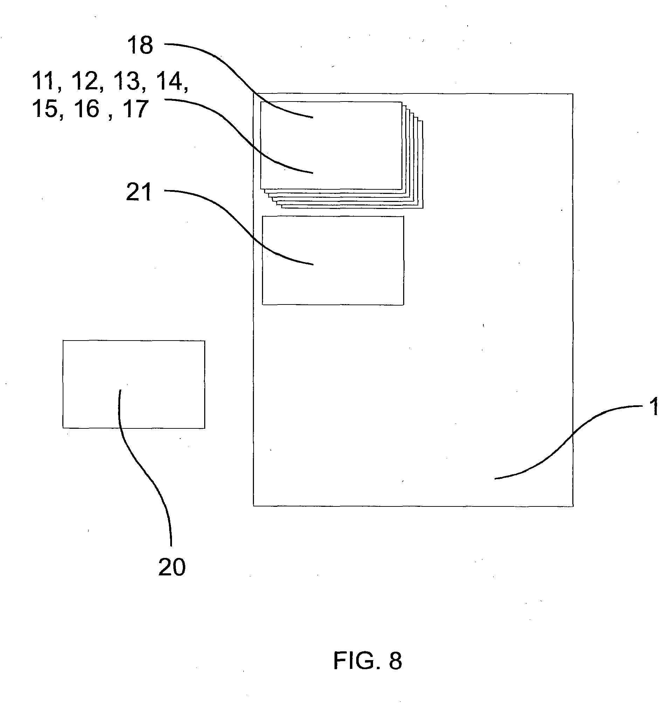

Figur 8 zeigt ein weiteres Ausführungsbeispiel einer erfindungsgemässen Ultraschallschweissvorrichtung 1. In diesem Ausführungsbeispiel ist die Rechenanordnung 20 ausserhalb der Vorrichtung 1, das heisst von der Vorrichtung abgesetzt angeordnet. Die Einlesevorrichtung 21 ist in diesem Ausführungsbeispiel in der Ultraschallschweissvorrichtung 1 angeordnet.

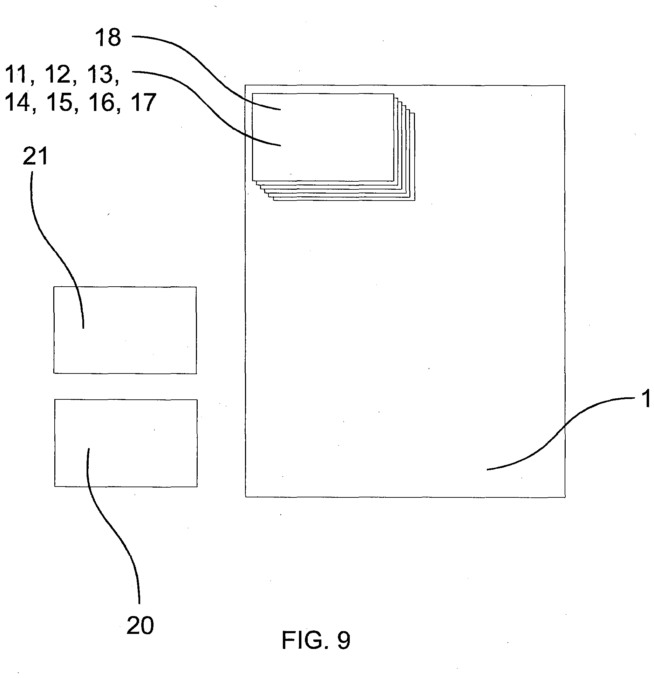

Figur 9 zeigt ein weiteres Ausführungsbeispiel der Ultraschallschweissvorrichtung 1, wobei in diesem Beispiel die Rechenanordnung 20 und die Einlesevorrichtung 21 ausserhalb der Ultraschallschweissvorrichtung 1 angeordnet sind.

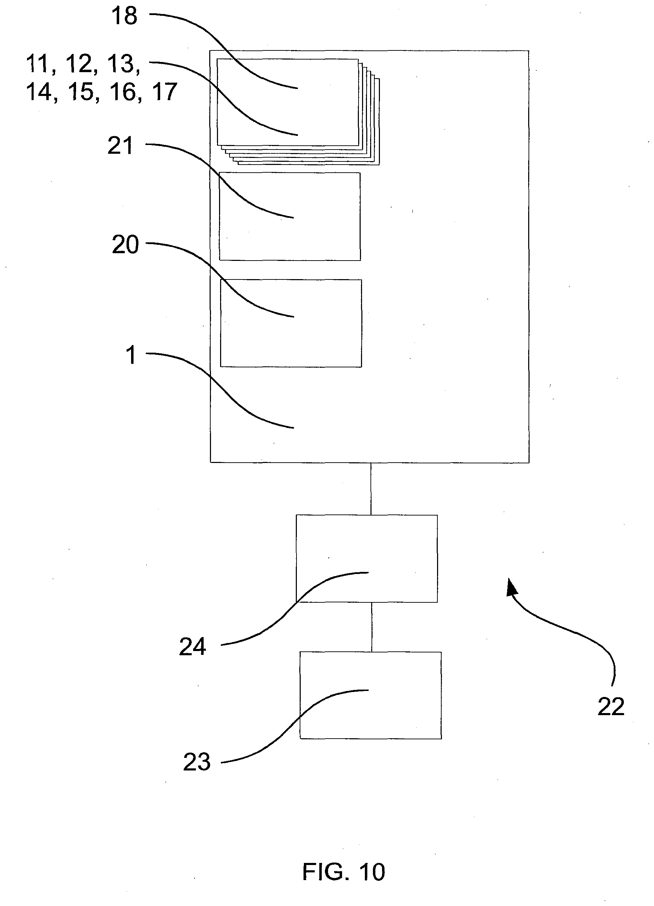

Figur 10 zeigt ein Ausführungsbeispiel eines erfindungsgemässen Systems 22. Das System 22 umfasst neben der Ultraschallschweissvorrichtung 1 weiter eine Datenbank 23, welche über eine Kommunikationsschnittstelle 24 mit der Vorrichtung 1 verbunden ist. Die Vorrichtung 1 umfasst eine Einlesevorrichtung 21, mit welcher die Identifikatoren 18 der Komponenten eingelesen werden. Die eingelesenen Identifikatoren 18 werden durch die Rechenanordnung 20, welche ebenfalls in der Vorrichtung 1 untergebracht ist, verarbeitet. Die Rechenanordnung 20 fragt über die Kommunikationsschnittstelle 24 die den Identifikatoren entsprechenden Parameter/Parametersätze auf einer Datenbank 23 ab. Beispielsweise umfasst die Datenbank 23 eine Lookup-Tabelle, in welcher aufgrund des eineindeutigen Identifikators ein der Komponente entsprechender Parametersatz hinterlegt ist. Die Rechenanordnung 20 der Vorrichtung berechnet aufgrund der von der Datenbank 23 abgefragten Parameter eine zu den Komponenten der Vorrichtung 1 passende Frequenzbandbreite und/oder Amplitude, wobei sie anschliessend den Generator entsprechend einstellt.

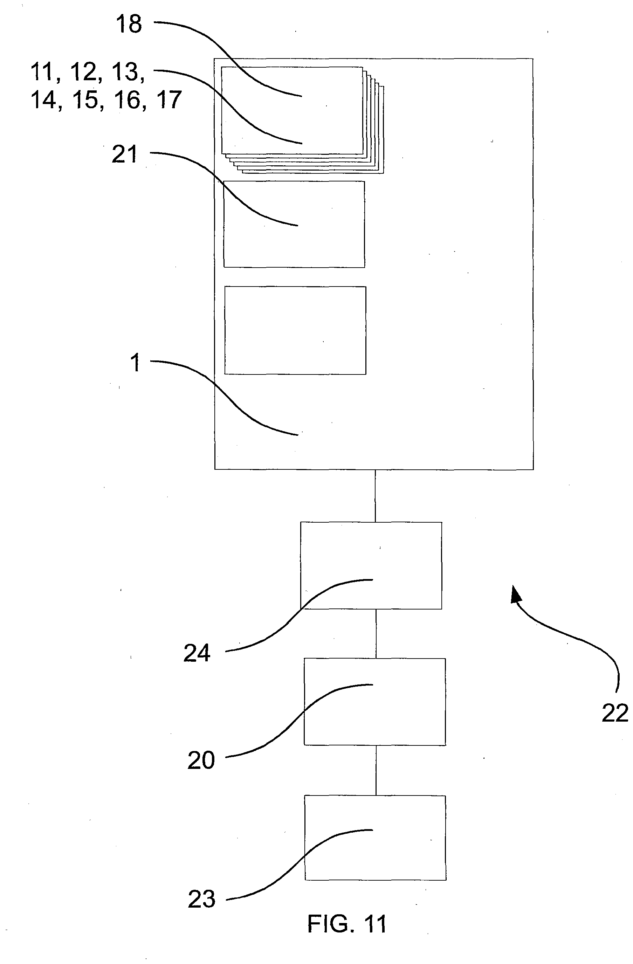

Figur 11 zeigt ein weiteres Ausführungsbeispiel eines erfindungsgemässen Systems 22. In diesem Ausführungsbeispiel ist die Rechenanordnung 20 nicht in der Ultraschallschweissvorrichtung 1 sondern ebenfalls abgesetzt angeordnet. Die Rechenanordnung 20 kann so zentral für mehrere Ultraschallbearbeitungsvorrichtungen 1 (nur eine Ultraschallbearbeitungsvorrichtung gezeigt) verwendet werden.

## Patentansprüche

1. Ultraschallbearbeitungsvorrichtung (1) zum Bearbeiten eines Werkstückes,
**dadurch gekennzeichnet, dass**
- wenigstens einer, insbesondere allen, der Komponenten, die ausgewählt ist aus der Gruppe Generator (11), Konverter (12), Booster (13), Sonotrode (14), HV-Kabel (15), Maschinengestell (16) und Aufnahmevorrichtung (17) für das Werkstück, ein Identifikator (18) zugeordnet ist,
- der Identifikator (18) wenigstens einen individuellen Parameter der Komponente charakterisiert,
- wobei der Parameter insbesondere ein die Prozessparameter, insbesondere die Resonanzfrequenz und die im Betrieb verwendbare Frequenzbandbreite und/oder die Amplitude der Vorrichtung, beeinflussender Parameter ist, insbesondere ein elektrischer, akustischer oder dimensionaler Parameter,
- der Vorrichtung (1) eine Eingabeschnittstelle (19) zugeordnet ist, mittels welcher der Identifikator (18) oder aufgrund des Identifikators (18) erzeugte Daten einlesbar sind, und
- der Vorrichtung (1) eine Rechenanordnung (20) zugeordnet ist, mittels welcher aufgrund des eingelesenen Identifikators (18) oder aufgrund der aus dem Identifikator (18) erzeugten Daten mindestens ein Parameter der Vorrichtung (1) derart bestimmbar ist, dass die Vorrichtung (1) in einem Sollbetriebszustand betrieben wird, insbesondere in einem resonanten Schwingungszustand.

2. Ultraschallbearbeitungsvorrichtung (1) gemäss Anspruch 1, wobei der individuelle Parameter der Komponente ein nach derer Herstellung gemessener Parameter ist.

3. Ultraschallbearbeitungsvorrichtung (1) gemäss einem der vorangehenden Ansprüche, wobei der individuelle Parameter eine Abweichung der Komponente gegenüber einem Soll-Zustand dieser Komponente charakterisiert.

4. Ultraschallbearbeitungsvorrichtung (1) gemäss einem der vorangehenden Ansprüche, wobei der Identifikator (18) die Komponente eineindeutig bestimmt.

5. Ultraschallbearbeitungsvorrichtung (1) gemäss einem der vorangehenden Ansprüche, wobei die Eingabeschnittstelle (19) als Einlesevorrichtung (21) ausgeführt ist, die mit der Rechenanordnung (20) verbindbar ist.

6. Ultraschallbearbeitungsvorrichtung (1) gemäss einem der vorangehenden Ansprüche, wobei die Einlesevorrichtung (21) als Komponente der Ultraschallbearbeitungsvorrichtung (1) ausgeführt ist.

7. Ultraschallbearbeitungsvorrichtung (1) gemäss einem der vorangehenden Ansprüche, wobei die Rechenanordnung (20) und/oder die Einlesevorrichtung (21) in einer Komponente, insbesondere im Generator (11), ausgeführt sind.

8. Ultraschallbearbeitungsvorrichtung (1) gemäss einem der vorangehenden Ansprüche, wobei die Rechenanordnung (20) eine Kommunikationsschnittstelle (24) aufweist, die so ausgestaltet ist, dass sie eine Fernwartung, insbesondere eine Fernkalibrierung der Ultraschallbearbeitungsvorrichtung (1), insbesondere des Generators (11), ermöglicht.

9. Ultraschallbearbeitungsvorrichtung (1) gemäss einem der vorangehenden Ansprüche, wobei der Identifikator (18) an der Komponente angebracht ist.

10. Ultraschallbearbeitungsvorrichtung (1) gemäss einem der vorangehenden Ansprüche, wobei der Identifikator (18) einer Verpackung der Komponente zugeordnet ist.

11. Verfahren zur Konfiguration einer Ultraschallbearbeitungsvorrichtung (1), insbesondere nach einem der vorangehenden Ansprüche, insbesondere nach einem Austausch wenigstens einer der Komponenten, die ausgewählt ist aus der Gruppe Generator (11), Konverter (12), Booster (13), Sonotrode (14), HV-Kabel (15), Maschinengestell (16) und Aufnahmevorrichtung (17) für das Werkstück,
**dadurch gekennzeichnet, dass**
das Verfahren die folgenden Schritte umfasst:
- Einlesen eines Identifikators (18) mittels einer Einlesevorrichtung (21), wobei der Identifikator (18) einen individuellen Parameter der Komponente charakterisiert,
wobei der Parameter insbesondere ein die Prozessparameter, insbesondere die Resonanzfrequenz und die im Betrieb verwendbare Frequenzbandbreite und/oder die Amplitude der Vorrichtung (1), beeinflussender Parameter ist, insbesondere ein elektrischer, akustischer oder dimensionaler Parameter,
- Bestimmen eines Parameters der Vorrichtung (1) aufgrund des eingelesenen Identifikators (18) oder aufgrund der aus dem Identifikator (18) erzeugten Daten, wobei der Parameter das Betreiben der Vorrichtung (1) in einem Sollbetriebszustand, insbesondere in einem resonanten Schwingungszustand, ermöglicht,
- Einstellen der Vorrichtung (1) entsprechend dem wenigstens einen Parameter, insbesondere Anpassen eines Frequenzbereiches und/oder einer Amplitude des Generators (11) .

12. Verfahren gemäss Anspruch 11, wobei das Verfahren weiter die Schritte umfasst
- Übermitteln des Identifikators (18) oder der aufgrund des Identifikators (18) erzeugten Daten zu einer, insbesondere räumlich getrennten, Rechenanordnung (20), und
- Übermitteln des aufgrund des Identifikators (18) bestimmten Parameters von der Rechenanordnung (20) zu der Vorrichtung (1).

13. Verfahren zum Herstellen einer Komponente für eine Ultraschallbearbeitungsvorrichtung, enthaltend die Schritte
- Erzeugen der Komponente,
- Ausmessen der Komponente und Erzeugen eines die Komponente charakterisierenden individuellen Parameters, insbesondere Parametersatzes,
**dadurch gekennzeichnet, dass**
das Verfahren weiterhin die folgenden Schritte enthält:
- Erzeugen eines eineindeutigen Identifikators (18), welcher dem Parameter, insbesondere dem Parametersatz, zugeordnet ist,
- Zuordnen des Identifikators (18) zur Komponente.

14. System (22) mit
- wenigstens einer Ultraschallbearbeitungsvorrichtung (1) gemäss einem der Ansprüche 1 bis 10,
- einer Datenbank (23),
- einer Kommunikationsschnittstelle (24) zwischen der Ultraschallbearbeitungsvorrichtung (1) und der Datenbank (23) zur Übermittlung von Informationen zwischen der Ultraschallbearbeitungsvorrichtung (1) und der Datenbank (23) .

15. System (22) gemäss Anspruch 14, wobei die Datenbank (23) die Verknüpfung eines Identifikators (18), welcher wenigstens einer der Komponenten der Ultraschallbearbeitungsvorrichtung (1) zugeordnet ist, und eines Datensatzes, welcher die Komponente charakterisiert, ermöglicht.

## Claims

1. An ultrasonic machining apparatus (1) for machining a workpiece,
**characterized in that**
- at least one, in particular all, of the components (10) selected from the group comprising generator (11), converter (12), booster (13), sonotrode (14), HV cable (15), machine frame (16), and holding apparatus (17) for the workpiece has an associated identifier (18),
- the identifier (18) characterizes at least one individual parameter of the component,
- wherein, in particular, the parameter is a parameter influencing the process parameters, in particular the resonance frequency and the frequency bandwidth usable during operation and/or the amplitude of the apparatus, in particular an electrical, acoustic, or dimensional parameter,
- the apparatus (1) has an associated input interface (19) by means of which the identifier (18) or data produced on the basis of the identifier (18) can be read in and
- the apparatus (1) has an associated computing arrangement (20) by means of which the read-in identifier (18) or data produced from the identifier (18) can be taken as a basis for determining at least one parameter of the apparatus (1) such that the apparatus (1) is operated in a specified operating state, in particular in a resonant vibration state.

2. The ultrasonic machining apparatus (1) as claimed in claim 1, wherein the individual parameter of the component is a parameter measured after said component is manufactured.

3. The ultrasonic machining apparatus (1) as claimed in either of the preceding claims, wherein the individual parameter characterizes a deviation in the component in comparison with a specified state of this component.

4. The ultrasonic machining apparatus (1) as claimed in one of the preceding claims, wherein the identifier (18) biuniquely determines the component.

5. The ultrasonic machining apparatus (1) as claimed in one of the preceding claims, wherein the input interface (19) is embodied as a reading-in apparatus (21) which is connectable to the computing arrangement (20).

6. The ultrasonic machining apparatus (1) as claimed in one of the preceding claims, wherein the reading-in apparatus (21) is embodied as a component of the ultrasonic machining apparatus (1).

7. The ultrasonic machining apparatus (1) as claimed in one of the preceding claims, wherein the computing arrangement (20) and/or the reading-in apparatus (21) are embodied in one component, in particular in the generator (11).

8. The ultrasonic machining apparatus (1) as claimed in one of the preceding claims, wherein the computing arrangement (20) has a communication interface (24) designed such that it allows remote maintenance, in particular remote calibration, of the ultrasonic machining apparatus (1), in particular of the generator (11).

9. The ultrasonic machining apparatus (1) as claimed in one of the preceding claims, wherein the identifier (18) is attached to the component.

10. The ultrasonic machining apparatus (1) as claimed in one of the preceding claims, wherein the identifier (18) is associated with a packaging of the component.

11. A method for configuring an ultrasonic machining apparatus (1), in particular as claimed in one of the preceding claims, in particular after replacement of at least one of the components selected from the group comprising generator (11), converter (12), booster (13), sonotrode (14), HV cable (15), machine frame (16), and holding apparatus (17) for the workpiece,
**characterized in that**
the method comprises the following steps:
- reading in, by means of a reading-in apparatus (21), an identifier (18) that characterizes an individual parameter of the component,
wherein, in particular, the parameter is a parameter influencing the process parameters, in particular the resonance frequency and the frequency bandwidth usable during operation and/or the amplitude of the apparatus (1), in particular an electrical, acoustic, or dimensional parameter,
- determining a parameter of the apparatus (1) on the basis of the read-in identifier (18) or on the basis of the data produced from the identifier (18), wherein the parameter allows the apparatus (1) to be operated in a specified operating state, in particular in a resonant vibration state,
- adjusting the apparatus (1) in accordance with the at least one parameter, in particular adapting a frequency range and/or an amplitude of the generator (11).

12. The method as claimed in claim 11, wherein the method further comprises the steps of:
- conveying the identifier (18) or the data produced on the basis of the identifier (18) to an, in particular physically separate, computing arrangement (20), and
- conveying the parameter determined on the basis of the identifier (18) from the computing arrangement (20) to the apparatus (1).

13. A method for manufacturing a component for an ultrasonic machining apparatus, comprising the steps of:
- producing the component,
- measuring the component and producing an individual parameter, in particular parameter set, characterizing the component (10),
**characterized in that**
the method further comprises the steps of:
- producing a biunique identifier (18) associated with the parameter, in particular the parameter set,
- associating the identifier (18) with the component.

14. A system (23) having
- at least one ultrasonic machining apparatus (1) as claimed in one of claims 1 to 10,
- a database (24),
- a communication interface (24) between the ultrasonic machining apparatus (1) and the database (24) for conveying information between the ultrasonic machining apparatus (1) and the database (23).

15. The system (22) as claimed in claim 14, wherein the database (23) allows an identifier (18) associated with at least one of the components of the ultrasonic machining apparatus (1) and a data record that characterizes the component (10) to be linked.

## Revendications

1. Dispositif de traitement par ultrasons (1) pour usiner une pièce,
**caractérisé en ce que**
- un identificateur (18) est associé à au moins un, en particulier à tous les composants, qui est choisi dans le groupe constitué par générateur (11), convertisseur (12), booster (13), sonotrode (14), câble haute tension (15), bâti de machine (16) et dispositif de réception (17) pour la pièce à usiner,
- l'identificateur (18) caractérise au moins un paramètre individuel du composant,
- le paramètre étant notamment un paramètre influençant les paramètres du processus, en particulier la fréquence de résonance et la largeur de bande de fréquence utilisable en fonctionnement et/ou l'amplitude du dispositif, notamment un paramètre électrique, acoustique ou dimensionnel,
- une interface d'entrée (19) est associée au dispositif (1), au moyen de laquelle l'identificateur (18) ou des données générées sur la base de l'identificateur (18) peuvent être lues, et
- au dispositif (1) est associé un dispositif de calcul (20) au moyen duquel, sur la base de l'identificateur (18) lu ou sur la base des données générées à partir de l'identificateur (18), au moins un paramètre du dispositif (1) peut être déterminé de telle sorte que le dispositif (1) fonctionne dans un état de fonctionnement de consigne, notamment dans un état d'oscillation résonant.

2. Dispositif de traitement par ultrasons (1) selon la revendication 1, dans lequel le paramètre individuel du composant est un paramètre mesuré après sa fabrication.

3. Dispositif de traitement par ultrasons (1) selon l'une des revendications précédentes, dans lequel le paramètre individuel caractérise un écart du composant par rapport à un état de consigne de ce composant.

4. Dispositif de traitement par ultrasons (1) selon l'une des revendications précédentes, dans lequel l'identificateur (18) détermine le composant de manière univoque.

5. Dispositif de traitement par ultrasons (1) selon l'une des revendications précédentes, dans lequel l'interface d'entrée (19) est réalisée sous la forme d'un dispositif de lecture (21) qui peut être relié au dispositif de calcul (20) .

6. Dispositif de traitement par ultrasons (1) selon l'une des revendications précédentes, dans lequel le dispositif de lecture (21) est réalisé en tant que composant du dispositif de traitement par ultrasons (1).

7. Dispositif de traitement par ultrasons (1) selon l'une des revendications précédentes, dans lequel le dispositif de calcul (20) et/ou le dispositif de lecture (21) sont réalisés dans un composant, notamment dans le générateur (11).

8. Dispositif de traitement par ultrasons (1) selon l'une des revendications précédentes, dans lequel le dispositif de calcul (20) comporte une interface de communication (24) configurée pour permettre une télémaintenance, notamment un télé-étalonnage du dispositif de traitement par ultrasons (1), notamment du générateur (11).

9. Dispositif de traitement par ultrasons (1) selon l'une quelconque des revendications précédentes, dans lequel l'identificateur (18) est fixé au composant.

10. Dispositif de traitement par ultrasons (1) selon l'une quelconque des revendications précédentes, dans lequel l'identificateur (18) est associé à un emballage du composant.

11. Procédé de configuration d'un dispositif de traitement par ultrasons (1), notamment selon l'une des revendications précédentes, en particulier après un remplacement d'au moins l'un des composants choisis dans le groupe constitué par générateur (11), convertisseur (12), booster (13), sonotrode (14), câble HV (15), bâti de la machine (16) et dispositif de réception (17) de la pièce à usiner,
**caractérisé en ce que**
le procédé comprend les étapes suivantes :
- la lecture d'un identificateur (18) au moyen d'un dispositif de lecture (21), l'identificateur (18) caractérisant un paramètre individuel du composant,
- le paramètre étant en particulier un paramètre influençant les paramètres de processus, en particulier la fréquence de résonance et la largeur de bande de fréquence utilisable en fonctionnement et/ou l'amplitude du dispositif (1), en particulier un paramètre électrique, acoustique ou dimensionnel,
- déterminer un paramètre du dispositif (1) sur la base de l'identificateur (18) lu ou sur la base des données générées à partir de l'identificateur (18), le paramètre permettant de faire fonctionner le dispositif (1) dans un état de fonctionnement de consigne, notamment dans un état d'oscillation résonant,
- le réglage du dispositif (1) en fonction dudit au moins un paramètre, en particulier l'adaptation d'une plage de fréquences et/ou d'une amplitude du générateur (11).

12. Procédé selon la revendication 11, ledit procédé comprenant en outre les étapes consistant à
- transmission de l'identificateur (18) ou des données générées sur la base de l'identificateur (18) à un dispositif de calcul (20), en particulier séparé dans l'espace, et
- transmettre le paramètre déterminé sur la base de l'identificateur (18) du dispositif de calcul (20) au dispositif (1).

13. Procédé de fabrication d'un composant pour un dispositif de traitement ultrasonique, comprenant les étapes suivantes :
- création du composant,
- mesure du composant et création d'un paramètre individuel, en particulier d'un jeu de paramètres, caractérisant le composant,
**caractérisé en ce que**
le procédé comprend en outre les étapes suivantes :
- la génération d'un identificateur univoque (18) qui est associé au paramètre, en particulier au jeu de paramètres,
- associer l'identificateur (18) au composant.

14. Système (22) avec
- au moins un dispositif de traitement par ultrasons (1) selon l'une quelconque des revendications 1 à 10,
- d'une base de données (23),
- une interface de communication (24) entre le dispositif de traitement ultrasonique (1) et la base de données (23) pour la transmission d'informations entre le dispositif de traitement ultrasonique (1) et la base de données (23) .

15. Système (22) selon la revendication 14, dans lequel la base de données (23) permet d'associer un identificateur (18) associé à au moins un des composants du dispositif de traitement par ultrasons (1) et un jeu de données caractérisant ledit composant.
